# EUROPÄISCHE PATENTSCHRIFT

(11) **EP 0 454 210 B1**
(45) Veröffentlichungstag und Bekanntmachung des Hinweises auf die Patenterteilung: **07.08.1996**
(21) Anmeldenummer: 91200843.0
(22) Anmeldetag: 11.04.1991
(51) Int. Cl.: C02F 1/52, C02F 11/12

(54) **Verfahren zum Entfernen von Phosphor und Suspensa aus Abwasser**
Process for elimination of phosphor and suspended matter from waste water
Procédé pour éliminer le phosphore et des matières suspendues d'eau usée

(30) Priorität: 26.04.1990 DE 4013375
(43) Veröffentlichungstag der Anmeldung: 30.10.1991
(73) Patentinhaber: PASSAVANT-WERKE AG, D-65322 Aarbergen 7 (DE)
(72) Erfinder: Paul, Ulrich, W-6056 Heusenstamm (DE); Schaper, Willi, W-6000 Frankfurt am Main 56 (DE); Eschenbach, Carl-Adolf, W-6240 Königstein (DE); Coenen, Hubert, Dr., W-4300 Essen 1 (DE); Seel, Karl, W-6209 Aarbergen 3 (DE)

(56) Entgegenhaltungen:
- EP-A- 0 002 858
- KORRESPONDENZ ABWASSER, Band 37, Nr. 7, Juli 1990, Seiten 778-784, St. Augustin, DE; H.J. PÖPEL et al.: "Simultanfällung mit nachgeschalteter Mikrosiebung auf dem Hauptklärwerk Wiesbaden"
- "Lehr- und Handbuch der Abwassertechnik", Band II, Auflage 2, Wilhelm Ernst & Sohn, Berlin, DE
- Lehr- und Handbuch der Abwassertechnik, Band IV (3. Auflage), Verlag Ernst, Berlin, 1985, S.526-532, 538, 550-552
- Abwassertechnologie, Springer Verlag, Berlin, 1984, S.486-487

## Beschreibung

Die Erfindung betrifft ein Verfahren zum Entfernen von gelöstem und in Suspensa enthaltenem Phosphor aus einem behandelten und mindestens teilweise geklärten, feststoffarmen Abwasser. Der Phosphor liegt im Abwasser nicht elementar, sondern im allgemeinen in Form von Phosphaten vor.

Bei der Reinigung kommunalen oder industriellen Abwassers ergibt sich ein in einen Vorfluter abzuführendes feststoffarmes Abwasser, das verschärften Qualitätsanforderungen nicht immer entspricht. Insbesondere können die Restgehalte an Phosphor und Suspensa in diesem Abwasser unerwünscht hoch sein. Es ist Z.B. aus dem Lehr- und Handbuch der Abwassertechnik, Band IV (3.Auflage), Abschnitt 6.5.1.3.6, bekannt, neben der biologischen Phosphatelimination die Fällung und Flockung mit Metallsalzen und die anschließende Filtration der Flocken in einem Kies- oder Sandbettfilter vorzunehmen. Jedoch wird die Verwendung eines Mikrosiebs im Lehr- und Handbuch der Abwassertechnik, Band II (2. Auflage), herausgegeben von der Abwassertechnischen Vereinigung e.V., Bonn, Seite 600, als ungeeignet bezeichnet.

Der Erfindung liegt die Aufgabe zugrunde, beim eingangs genannten Verfahren den Restgehalt an Phosphor auf einfache Weise weiter zu verringern. Erfindungsgemäß geschieht dies dadurch, daß man dem feststoffarmen Abwasser Fällungs- und Flockungsmittel zum Überführen des gelösten Phosphors in ungelöste Form zugibt und Fällungsprodukte und Suspensa durch Mikrosiebung mit Maschenweiten im Bereich von etwa 10 bis 150 µ entfernt, wobei die Mikrosiebung mit einer Siebflächenbelastung von 10 - 50 m³/m².h Abwasser erfolgt und wobei das Abwasser mit einer Geschwindigkeit von höchstens 0,3m/s der Mikrosiebung zugeführt wird. Mit Suspensa werden Schwebstoffe organischer oder anorganischer Natur bezeichnet.

Die Kombination von Suspensaentnahme und gleichzeitiger Phosphorelimination unter Einsatz der Mikrosiebung führt zu überraschend vorteilhaften Ergebnissen. Durch dieses Verfahren lassen sich die heutigen und auch die zukünftigen Anforderungen an den verringerten Restgehalt der Suspensa und des Phosphors in einem kommunalen oder industriellen Abwasser erfüllen, wobei dies vorteilhafterweise mit niedrigeren Investitionskosten als bei der Filtration nach dem Gravitäts- oder Druckprinzip möglich ist. Beim erfindungsgemäßen Verfahren wird in einer der Suspensaentnahme durch Mikrosiebung vorgeschalteten Behandlung eine Phosphorfällung mit anschließender Flockung und Konditionierung vorgenommen, so daß die Mikrosiebung die Anforderungen an das gereinigte Abwasser erfüllen kann. Zweckmäßigerweise wird der Phosphor nach der Fällung gemeinsam mit den Suspensa geflockt und entfernt.

Eine Weiterbildung der Erfindung besteht darin, daß die Fällung und Flockung in einer Entstabilisierungsstufe und in einer davon räumlich getrennten Agglomerationsstufe erfolgen, wobei die Verweilzeit in der Entstabilisierungsstufe 15 bis 60 Minuten beträgt.

Wenn die Mikrosiebung einstufig erfolgt, arbeitet man zumeist mit einem Sieb mit einer Maschenweite von höchstens 100 µ. In weiterer Ausgestaltung der Erfindung ist es vorteilhaft, die Mikrosiebung in zwei Stufen mit einer Vorsiebung mit einer Maschenweite von 60 bis 150 µ und einer Feinsiebung mit einer Maschenweite von 10 bis 80 µ durchzuführen. Die zweistufige Mikrosiebung ermöglicht sowohl einen höheren Durchsatz an Abwasser als auch eine verbesserte Entfernung von Phosphor und Suspensa.

Empfehlenswert ist ferner, die Zulaufgeschwindigkeit des Abwassers zur Mikrosiebung auf höchstens 0,25 m/s einzustellen.

Die Fällung des Phosphors im Abwasser kann in bekannter Weise mittels Eisen- oder Aluminiumsalzen oder mittels Calciumhydroxid erfolgen, wobei sich auch mit Mischungen dieser Substanzen arbeiten läßt. Es kann zweckmäßig sein, vor oder bei der Phosphorfällung den pH-Wert des Abwassers mittels alkalisierender oder acidisierender Hilfsstoffe einzustellen. Als Flockungshilfsmittel verwendet man vorzugsweise in der Agglomerationsstufe Polyelektrolyt anionischer, kationischer oder nichtionogener Wirkungsweise.

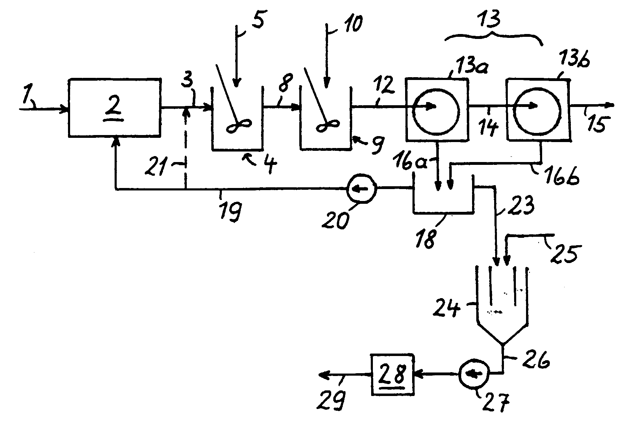

Ausgestaltungsmöglichkeiten des Verfahrens werden mit Hilfe der Zeichnung erläutert, die ein Fließschema des Verfahrens zeigt.

Ein kommunales und/oder industrielles Abwasser wird in der Leitung (1) herangeführt und in einer Reinigungsanlage (2) behandelt und dabei mindestens teilweise geklärt. Die Anlage (2) kann z.B. eine biologische Reinigung einschließen, zu der vorzugsweise auch noch eine Nachklärung gehört. Ein feststoffarmes Abwasser, das noch Suspensa und gelösten Phosphor enthält, verläßt die Anlage (2) in der Leitung (3) und gelangt zu einer Entstabilisierungsstufe (4), die vor allem der Fällung des gelösten Phosphors dient. Zu diesem Zweck gibt man durch die Leitung (5) in dosierter Menge Fällungschemikalien zu, z.B. Eisen- oder Aluminiumsalze oder auch Calciumhydroxid. Es empfiehlt sich, in der Entstabilisierungsstufe (4) für das durch Rühren in Bewegung gehaltene Abwasser eine Verweilzeit im Bereich von etwa 15 bis 60 Minuten einzuhalten.

Das Abwasser aus der Entstabilisierungsstufe (4) fließt durch die Leitung (8) zu einer Agglomerationsstufe (9), die der Ausbildung von Feststoffflocken dient. Flockungs- und Flockungshilfsmittel werden durch die Leitung (10) in dosierter Menge zugeführt. Bei den an sich bekannten Flockungshilfsmitteln kann es sich um Polyelektrolyte anionischer, kationischer oder nichtionogener Wirkungsweise handeln. In der Agglomerationsstufe (9) wird bevorzugt bei vorsichtigem Rühren des Abwassers gearbeitet.

In der Leitung (12) verläßt Abwasser die Agglomerierungsstufe (9), in welchem Phosphor und Suspensa gemeinsam gefällt und geflockt sind. Um das Zerteilen der gebildeten Flocken möglichst zu vermeiden, empfiehlt es sich, dieses Abwasser mit möglichst geringer Turbulenz der Mikrosiebung (13) zuzuführen. Im Verfahren der Zeichnung ist die Mikrosiebung zweistufig ausgebildet, sie besteht aus der Vorsiebung (13a), wobei man mit Maschenweiten im Bereich von 60 bis 150 µ arbeitet, und der Feinsiebung (13b), in welcher Maschenweiten im Bereich von 10 bis 80 µ zur Anwendung kommen. Wegen der schonenden Behandlung der Feststoffflocken ist, das Abwasser durch die Leitungen (12) und (14) mit Zulaufgeschwindigkeiten von höchstens 0,3 m/s und vorzugsweise höchstens 0,25 m/s der jeweiligen Mikrosiebvorrichtung aufzugeben. Behandeltes Abwasser verläßt die Mikrosiebung (13) in der Leitung (15), der restliche Feststoffgehalt in diesem Abwasser liegt deutlich unterhalb von 10 mg/l und der gesamte Phosphorgehalt (gelöster und ungelöster Phosphor) beträgt weniger als 1 mg/l. Demgegenüber kann der Suspensagehalt im Abwasser der Leitung (3) z.B. bei 20 bis 60 mg/l und der gesamte Phosphorgehalt in der Leitung (3) bei etwa 5 bis 20 mg/l liegen.

Das aus den Leitungen (16a) und (16b) aus der Mikrosiebung kommende Schmutzwasser gelangt zunächst in einen Verteilbehälter (18) und wird teilweise durch die Leitung (19) mit Hilfe der Schlammpumpe (20) zurück in die Reinigungsanlage (2) geführt. Möglich ist es auch, dieses zurückgeführte Schmutzwasser ganz oder teilweise durch die gestrichelt eingezeichnete Leitung (21) dem Abwasser der Leitung (3) zuzumischen. Restliches Schmutzwasser wird aus dem Behälter (18) in der Leitung (23) abgezogen und einem Eindicker (24) aufgegeben. Durch die Leitung (25) gibt man diesem Eindicker auch an sich bekannte Konditionierungsmittel zu, um die Abtrennung des Wassers vom Schlamm zu erleichtern. Durch die Leitung (26) und über die Pumpe (27) führt man Schlamm aus dem Eindicker zu einer Filterpresse (28) und erhält teilentwässerten Schlamm, den man durch die Leitung (29) einem nicht dargestellten Transportbehälter aufgibt.

Naheliegende Abwandlungen des in der Zeichnung dargestellten Verfahrens bestehen darin, daß man die Mikrosiebung (13) nicht zweistufig, sondern nur einstufig ausbildet. Empfehlenswert kann es auch sein, zwischen die Agglomerationsstufe (9) und die Mikrosiebung (13) ein Beruhigungsbecken einzuschalten, um die Ausbildung gut absiebbarer Feststoffflocken weiter zu verbessern.

### Beispiel

In einer kommunalen Kläranlage mit den wesentlichen Verfahrensstufen Vorklärung, Belebtschlammbiologie und Nachklärung ohne spezifische Einrichtungen zur Phosphorelimination fällt ein geklärtes Abwasser an, welches 40 mg/l an Suspensa enthält, wobei dieser restliche Feststoffgehalt zu 1,8 Gew.-% aus Phosphor besteht. Der Gehalt an gelöstem Phosphor in diesem Abwasser liegt bei 6,8 mg/l. In einer Entstabilisierungsstufe (4) werden diesem Abwasser pro Liter 27,2 mg Fe in Form eines dreiwertigen Eisensalzes zur Phosphatfällung zudosiert, dabei bilden sich pro Liter 31,5 mg Eisenphosphat in flockiger, ungelöster Form. Der überschüssige Fe-Gehalt fällt als Eisenhydroxid in einer Menge von 29,8 mg/l an. In einer Agglomerationsstufe (9) gibt man dem Abwasser pro Liter 0,4 mg Polyelektrolyt zu und leitet das Abwasser dann zu einer Mikrosiebmaschine, die mit einem monofilen Textilsieb mit einer Maschenweite von 20 µ bespannt ist. Das behandelte Abwasser enthält dann noch einen abfiltrierbaren Rest-Feststoffgehalt von 5,5 mg/l und einen gesamten Phosphorgehalt (gelöster und ungelöster Phosphor) von 0,7 mg/l.

Im Zulauf zur Mikrosiebmaschine beträgt der Suspensagehalt des Abwassers 40 mg/l, hinzu kommen 31,5 mg/l an Eisenphosphat aus der vorausgegangenen Fällung und 29,8 mg/l an Eisen-III-Hydroxid aus der im Überschuß eingesetzten Eisenmenge von 27,2 mg/l. Der Gehalt an ungelöstem Phosphor im der Mikrosiebmaschine zugeführten Abwasser beträgt 7,2 mg/l und damit 7,1 %, bezogen auf den abzusiebenden Feststoffgehalt von 101,3 mg/l. Die Mikrosiebung erbringt demnach eine 86 %ige Suspensaentnahme und eine etwa 90 %ige Phosphorelimination.

## Patentansprüche

1. Verfahren zum Entfernen von gelöstem und in Suspensa enthaltenem Phosphor aus einem behandelten und mindestens teilweise geklärten, feststoffarmen Abwasser, dem man in einer Entstabilisierungsstufe unter Rühren und in einer davon räumlich getrennten Agglomerationsstufe Fällungs- und Flockungsmittel zum Überführen des gelösten Phosphors in ungelöste Form zugibt und aus dem man Suspensa und Phosphor durch Mikrosiebung mit Maschenweiten im Bereich von 10 bis 150 µ entfernt, **dadurch gekennzeichnet,** daß die Mikrosiebung mit einer Siebflächenbelastung pro Stunde von 10 bis 50 m³ Abwasser pro m² Siebfläche erfolgt und das Abwasser mit einer Geschwindigkeit von höchstens 0,3 m/s der Mikrosiebung zugeführt wird.

2. Verfahren nach Anspruch 1, **dadurch gekennzeichnet,** daß die Mikrosiebung in zwei Stufen mit einer Vorsiebung mit einer Maschenweite 60 bis 150 µ und einer Feinsiebung mit einer Maschenweite von 10 bis 80 µ erfolgt.

## Claims

1. Procedure for removal of dissolved or suspended phosphore from treated and an least partially clarified waste water containing only a small quantity of solids whereby precipitation and flocculation agents are added while stirring to the destabilization stage and physically separated agglomeration stage in order to transfer dissolved phosphore into suspended phosphore which then is removed by microscreening with mesh sizes of 10 to 150µ, **characterized in that** the micro-screening is done at a surface loading rate of 10 to 50 m³ waste water per m² and hour and that the waste water is introduced to the mircoscreening at a maximum speed of 0,3 m/s.

2. Procedure according to claim 1, **characterized in that** the microscreening is performed in two stages comprising a preliminary screening with mesh sizes of 60 to 150µ and fine screening with mesh sizes of 10 to 80µ.

## Revendications

1. Procédé destiné à l'élimination de phosphore dissous ou en suspension dans les eaux résiduaires traitées et, au moins partiellement, clarifiées contenant une quantité inférieure de matières solides, auxquelles on ajoute en remuant des précipitants et floculants dans l'étape de déstabilisation et dans l'étape d'agglomération qui est phyisiquement séparée de la première étape, afin de transformer le phosphore dissous en phosphore en suspension, et desquelles les matières en suspension et le phosphore sont enlevés par un micro-tamis ayant.une ouverture de maille de 10 à 150 µ, **caractérisé en ce que** le micro-tamisage est effectué à une charge par unité de surface filtrante de 10 à 50 m³ eaux résiduaires par m² par heure et que les eaux résiduaires sont introduites au micro-tamis à une vitesse de 0,3 m/s au maximum.

2. Procédé selon revendication 1, **caractérisé en ce que** le micro-tamisage est effectué en deux étapes comprenant un tamisage préliminaire avec une ouverture de maille de 60 à 150 µ et un tamisage fin avec une ouverture de maille de 10 à 80 µ.
